# EUROPEAN PATENT APPLICATION

(11) **EP 0 710 827 A2**
(43) Date of publication of application: **08.05.1996**
(21) Application number: 95117443.2
(22) Date of filing: 06.11.1995
(51) Int. Cl.: G01L 23/18

(54) **Combustion pressure sensor and fabrication method thereof**

(30) Priority: 07.11.1994 JP 272174/94; 27.03.1995 JP 67744/95
(71) Applicant: MATSUSHITA ELECTRIC INDUSTRIAL CO., LTD., Kadoma-shi, Osaka-fu, 571 (JP)
(72) Inventor: Kusakabe, Hiroki, Osaka City, 540 (JP); Okauchi, Tohru, Ikoma City, 630-01 (JP); Takigawa, Masuo, Ikoma City, 630-01 (JP)
(74) Representative: Dr. Elisabeth Jung Dr. Jürgen Schirdewahn Dipl.-Ing. Claus Gernhardt

(57) **Abstract**

A body of a combustion pressure sensor is divided into two parts, a cylindrical lower body (2) and a cylindrical upper body (4). A diaphragm (7) and a pressure sensing element (9) are attached to the lower end and the upper end of the lower body, respectively, and a pressure transmission member (8) connects the diaphragm and the pressure sensing element. The upper body is connected to the lower body to cover the pressure sensing element in such a manner that the connection part is disposed remote from the pressure sensing element.

## Description

### FIELD OF THE INVENTION AND RELATED ART STATEMENT

### 1. FIELD OF THE INVENTION

The present invention relates to a combustion pressure sensor which is suitable for detection of a combustion pressure in a cylinder of an internal combustion engine or the like, and to a fabrication method of the combustion pressure sensor.

### 2. DESCRIPTION OF THE RELATED ART

A pressure sensor for detecting a pressure by using a strain sensing resistor formed on a diaphragm is commonly in use today. In the majority of the pressure sensors, the pressure to be measured is directly applied to the diaphragm. However, the pressure sensors mentioned above are not usable for measurement of pressure of high temperature fluid or gas, such as a combustion pressure because of problem of heat resistivity of the strain sensing resistors. There is a prior art that the strain sensing resistor is separated from the high temperature fluid by using a double-diaphragm as described hereafter.

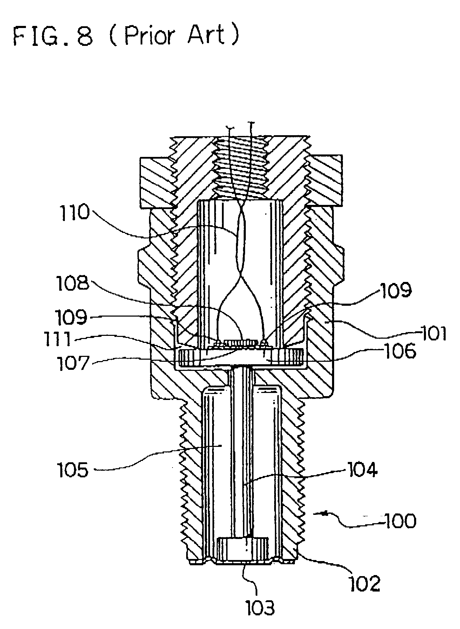

FIG.8 is a cross-sectional side view of a combustion pressure sensor 100 disclosed in the prior art, the United States patent No. 4,586,018. Referring to FIG.8, a lower opening 102 of a body 101 of the combustion pressure sensor 100 is sealed with a lower diaphragm 103 made of metal. An upper diaphragm 106 made of metal is disposed in an upper chamber 111. A pressure transmission member 104 is disposed in a hole 105 of the body 101 so as to transmit a pressure applied to the lower diaphragm 103 to the upper diaphragm 106.

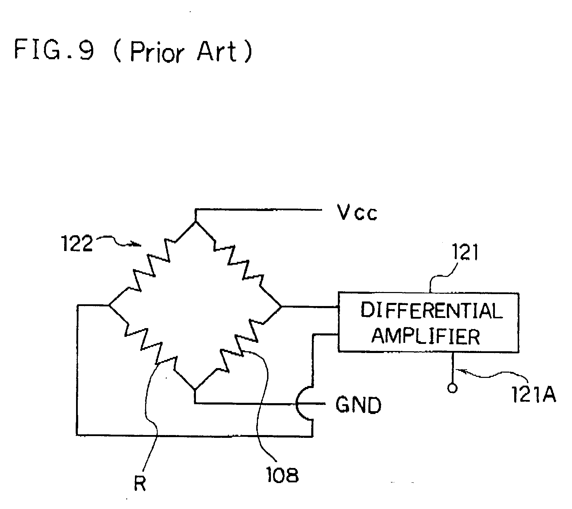

An insulation layer 107 is formed on an upper surface of the upper diaphragm 106, and a strain sensing resistor 108 (a thick film resistor) is formed on the insulation layer 107. In general, terminals 109 of the strain sensing resistor 108 are connected to an external pressure detection circuit as shown in FIG.9 through respective wires 110. The pressure detection circuit comprises a bridge circuit 122, wherein the strain sensing resistor 108 forms one of four resistors.

A pressure applied to the lower diaphragm 103 is transmitted to the upper diaphragm 106 through the pressure transmission member 104, and the resistance value of the strain sensing resistor 108 varies responding to the pressure. The variation of the resistance value of the strain sensing resistor 108 is detected as a variation of an output voltage 121A of a differential amplifier 121, and the pressure is detected.

In the combustion pressure sensor 100, it is preferable that a circuit board comprising the bridge circuit 122 and the differential amplifier 121 is enclosed in the body 101 of the combustion pressure sensor 100 in point of view of noise-resistivity and practical utility. The body 101 of the prior art is made integral so as to achieve a sufficient rigidity against a twisting force. Therefore, after the circuit board is enclosed in the body 101, adjusting by trimming of a variable resistor for changing a gain of the differential amplifier 121, etc., was impossible.

In the prior art, the pressure transmission member 104 is not fixed to the upper diaphragm 106 but only made to contact it. Therefore, if the contact position of the pressure transmission member 104 and the upper diaphragm 106 changes, a sensitivity of the combustion pressure sensor is liable to change.

In another conventional combustion pressure sensor, a pressure transmission member is fixed to a pressure sensing element. In fabrication of such type of the pressure sensing element, a plurality of substrates of the pressure sensing elements each having a pressure transmission member are arranged in a pallet jig. Subsequently, an insulation layer and a strain sensing resistor must be formed on the substrate one by one.

The reason is as follows: if the strain sensing resistor would be formed on the substrate in advance, and followed by subsequent fixing of pressure transmission member to the substrate by welding, for example, the strain sensing resistor would be damaged by pressing force and heat in the welding process. Therefore, in the prior art, the pressure transmission member must be attached to the substrate prior to forming of the strain sensing resistor. It is troublesome to handle the substrate having the pressure transmission member because the substrate must be held by the pallet jig one by one to form the strain sensing resistor on the substrate. Therefore, the conventional combustion pressure sensor is not suitable for mass production, and therefore, cost reduction is difficult.

### OBJECT AND SUMMARY OF THE INVENTION

An object of the present invention is to provide a combustion pressure sensor capable of detecting a combustion pressure with a high accuracy under a circumference which varies widely in pressure and temperature such as in a cylinder of an internal combustion engine.

Another object of the present invention is to provide a manufacturing method of the combustion pressure sensor which is suitable for mass production line and can be manufactured in a low cost.

In a first mode of the present invention, a body of the combustion pressure sensor comprises a lower body having a diaphragm at an end part and a substantially cylindrical upper body. A pressure transmission member for transmitting a pressure to a pressure sensing element is attached to an inner surface of the diaphragm, and the pressure sensing element is mounted on the other end part of the lower body. The upper body is connected to the lower body to cover the pressure sensing element. Moreover, a connecting position of the upper body and the lower body is remotely disposed from the position of the pressure sensing element mounted on the lower body in the direction of the diaphragm or the opposite direction thereof.

In a second mode of the present invention, on top of the features of the first mode, an attachment member for mounting a built-in circuit and a connector is attached on the lower body. The upper body is attached to the lower body so as to cover the pressure sensing element, the built-in circuit and the connector.

In a third mode of the present invention, the pressure sensing element and the pressure transmission member are formed in one body.

In a fourth mode of the present invention, in fabrication of the pressure sensing element, an insulation film is formed on a surface of a metal substrate which is larger than a diameter of the pressure sensing element, and electrodes and strain sensing resistors are formed on the insulation film. Subsequently, peripheral part of the metal substrate is cut away to a desired diameter of the pressure sensing element.

In a fifth mode of the present invention, in fabrication of the pressure sensing element, a plurality of the pressure transmission members are attached to a principal face of a metal plate which has a size far larger than the diameter of the pressure sensing element. Subsequently, an insulation film is formed on the opposite face of the metal plate, and a plurality of electrodes and strain sensing elements are formed on the insulation film. Finally, the metal plate is cut and divided into predetermined number of pieces, so that each piece has the pressure sensing element thereon.

According to the first mode of the present invention, the body is composed of the upper body and the lower body. Before attaching the upper body to the lower body, the connecting part between the lower body and the pressure sensing element is exposed outward. Therefore, the pressure sensing element can be easily and correctly mounted on the lower body. Manufacturing cost is reduced because of easy mounting operation.

Moreover, the connection part of the upper body and the lower body is remotely disposed from the connection part of the pressure sensing element and the lower body. Therefore, the strain sensing resistor formed on the pressure sensing element is relieved from influence of heat which is generated in the connecting process such as welding. Residual stress is not given to the pressure sensing element, and therefore, the combustion pressure sensor having a stable high measurement accuracy and little resistance value change with passage of time is attainable.

According to the second mode of the present invention, the attachment member for mounting the built-in circuit and the connector is attached to the lower body. After fixing the attachment member to the lower body, the upper body is fixed to the lower body, and thereby, the pressure sensing element, the built-in circuit and the connector are covered with the upper body. Assembly operation is easily automated, and reliability of connections in the built-in circuit is improved. Protection of the pressure sensing element, the built-in circuit and the connector is improved.

According to the third mode of the present invention, since the pressure sensing element and the pressure transmission member are configured integrate, the integral body can be made by using such material as ceramic which can not be welded.

According to the fourth mode of the present invention, the peripheral part of the pressure sensing element is cut away after forming of the insulation film and strain resistors on the surface. Therefore, the peripheral part which lacks flatness of the insulation film is removed, and a substrate of the pressure sensing element having a flat insulation film is attainable. Consequently, dispersion of sensitivity of the pressure sensing element is reduced.

According to the fifth mode of the present invention, after attaching plural pressure transmission members onto one surface of the metal plate having a large area, the insulation film is formed. Then after further forming of the strain sensing resistors on the insulation film, the metal plate is cut and divided into the plural pieces of the pressure sensing elements. Therefore, strain sensing resistor is relieved from influence of heat strain given in the step of attaching the pressure transmission member. Since a plurality of the pressure sensing element are made simultaneously on the large metal plate, a manufacturing cost is reduced.

### BRIEF DESCRIPTION OF THE DRAWING

FIG.1 is a cross-sectional side view of the combustion pressure sensor of a first embodiment in accordance with the present invention;
FIG.2 is a cross-sectional side view of the combustion pressure sensor of a second embodiment in accordance with the present invention;
FIG.3A is a plan view of a pressure sensing element;
FIG.3B is a cross-sectional side view of the pressure sensing element;
FIG.4 is a cross-sectional view at IV-IV section of FIG.1;
FIG.5 is a cross-sectional view at V-V section of FIG.2;
FIG.6 is a perspective view of a metal plate having plural pressure transmission members in a fabrication process of the pressure sensing element of a third embodiment in accordance with the present invention;
FIG.7 is a perspective view before cutting the metal plate into pieces of the pressure sensing elements made by the fabrication method in the third embodiment;
FIG.8 is the cross-sectional side view of the combustion pressure sensor in the prior art;
FIG.9 is the pressure detection circuit used in common in the present invention and the prior art.

### DESCRIPTION OF THE PREFERRED EMBODIMENT

Preferred embodiments of the present invention are described hereinafter with reference to the accompanying drawings.

### [First Embodiment]

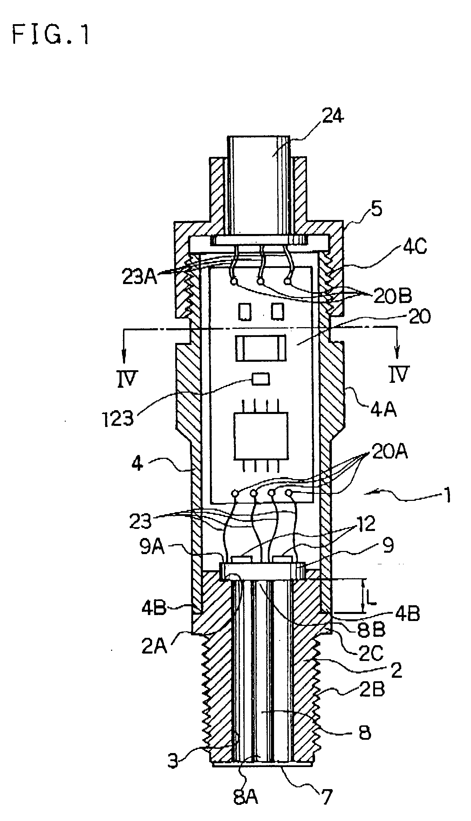

A first embodiment is described with reference to FIG.1, FIG.3A, FIG.3B, FIG.4 and FIG.9.

FIG.1 is a cross-sectional side view of the combustion pressure sensor of the first embodiment in accordance with the present invention. Referring to FIG.1, a body 1 of the combustion pressure sensor comprises a lower body 2 made of metal, e.g., steel having a through-hole 3, a cylindrical upper body 4 made of metal, e.g., steel and a plug 5. A lower opening of the through-hole 3 is sealed with a diaphragm 7 of a thin metal plate, e.g., steel of 0.2 mm thickness, for example. The lower body 2 having the diaphragm 7 is to be inserted in a region, whereof the pressure change is measured, for example, an internal space of a cylinder of an internal combustion engine.

A rod shaped pressure transmission member 8 made of metal, e.g., steel is fixed to the inner surface of the diaphragm 7 at its one end 8A by welding. A disc-shaped pressure sensing element 9 made of metal, e.g., steel is attached to the opposite end 8B of the pressure transmission member 8 by welding. Thickness of the pressure sensing element 9 is as large as 10---20 times of thickness of the diaphragm 7 so that the pressure sensing element 9 is not deformed by deformation of the diaphragm 7 by temperature change.

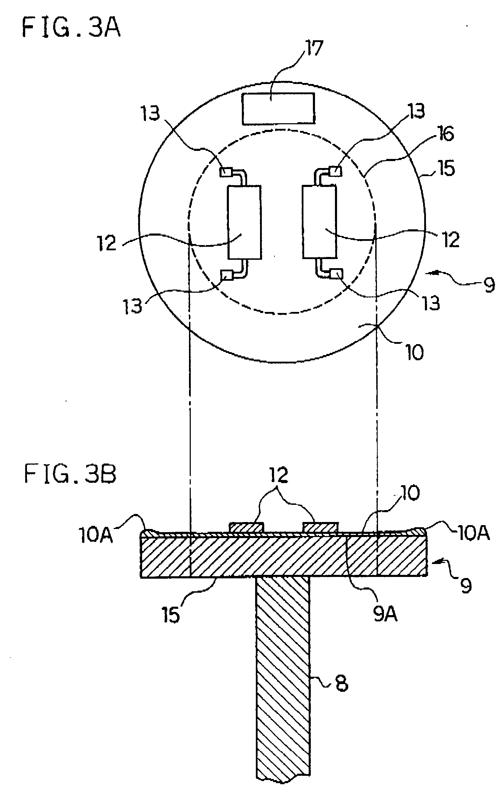

An insulation film 10 as shown in FIG.3B of non-alkaline glassceramic is formed on an upper face 9A of the pressure sensing element 9. An example of the non-alkaline glassceramic is shown in the United States patent No. 5,057,378.

An example of forming the insulation film 10 is described hereafter. Mixture slurry of powder of the non-alkaline glassceramic and an organic solvent (isopropylene, for example) is coated on the upper face 9A of a substrate of the pressure sensing element 9 by electrophoretic deposition. The coated non-alkaline glassceramic slurry layer is dried and fired at 600---700 °C. The resultant non-alkaline glass-ceramic film has an excellent heat resistivity. Therefore, the film is suitable for the pressure sensing element 9 of which temperature rises considerably.

As shown in FIG.3B, when the mixture slurry is coated on the upper face 9A of a circular substrate 15 of the pressure sensing element 9, the mixture slurry generally rises at peripheral part by a surface tension. After firing, the resultant film still has a circular rise part 10A. The rise part 10A lacks flatness. Therefore, if a strain sensing resistor 12 is formed on the rise part 10A, an exact designed value of resistance can not be obtained.

As shown in FIG.3A, in the pressure sensing element 9 in the first embodiment, the insulation film 10 is formed by coating the mixture slurry on the circular substrate 15 having a larger diameter than a circle 16 shown by broken line of a designed diameter. After drying and firing, the circular substrate 15 is cut along the designed circle 16 with a known laser beam cutting apparatus. Consequently, the peripheral part including the rise part 10A is removed, and the pressure sensing element 9 having a flat insulation film 10 is attained.

A region 17 in margin between the circumference of the circular substrate 15 and the circle 16 can be utilized for test coating described hereafter. In such case, the circular substrate 15 including the test coating region 17 is cut away along the circle 16 after forming the strain sensing resistor 12.

One or two strain sensing resistors 12 and conductive wiring films 13 for connecting the strain sensing resistors 12 are formed on the insulation film 10 by a material containing ruthenium oxide (RuO₂) and a material containing silver, respectively. It is known that the strain sensing resistor 12 itself generates noise (hereinafter is referred to as self-generation noise). Experiments shows that a length of the strain sensing resistor 12 should be 1.8mm or more so that the self-generation noise becomes considerably low. In the embodiment, the length is 1.8mm and a width is about 1.5mm. A thickness of the strain sensing resistor 12 is selected within a range of 10 and 50 µm so as to render a resistance value of 10---20 kΩ.

First, the conductive films 13 which serve as electrodes of the strain sensing resistor 12 are printed on the insulation film 10 by using a first conductive paste containing silver and palladium or silver and platinum as conductors, followed by firing at a predetermined temperature. Subsequently, a second paste for forming the strain sensing resistor 12 is coated by using a discharge nozzle. The second paste contains ruthenium oxide powder, glass powder and binder, for example.

Prior to coating the strain sensing resistor 12, it is preferable to make a test coating in the region 17 on the margin of the circular substrate 15 as shown in FIG.3A, go as to check whether the paste is smoothly and normally discharged from the discharge nozzle. Dispersion or scattering of the resistance value is reduced by using the result of the test coating. Subsequently, the paste is coated in two oblong regions to become the strain sensing resistors 12 so as to contact the respective conductive films 13 at both ends. Consequently, the strain sensing resistors 12 are formed. The coated layers to become the strain sensing resistors 12 are then fired at a predetermined temperature.

The pressure sensing element 9 having the pressure transmission member 8 is inserted into the through-hole 3 of the lower body 2 as shown in FIG.1. A lower end 8A of the pressure transmission member 8 is welded to the diaphragm 7 with a laser beam welder, for example. The peripheral part of the pressure sensing element 9 is also welded to a step-cut part 2A of the lower body 2 with the laser beam welder.

The lower body 2 is provided with external threads 2B for connecting the combustion pressure sensor to an object to be measured. A lower end 4B of the upper body 4 is fixed or mechanically connected to a flange 2C of the lower body 2 by welding or caulking. The upper body 4 is provided with a hexagonal locknut 4A. In order to screw the external threads 2B of the combustion pressure sensor into internal threads of the object to be measured, the hexagonal locknut 4A is rotated with a wrench. Accordingly, a mechanical strength for withstanding a torque given by the wrench is required to the connection parts of the upper body 4 and the lower body 2. In order to keep a sufficient mechanical strength, when the upper body 4 is welded to the lower body 2, a large amount of heat energy is applied to the connection part hence raising the temperature of the connection part.

On the other hand, when the upper body 4 is mechanically connected to the lower body 2 by caulking, a large mechanical stress is produced to the lower body 2. Consequently, the pressure sensing element 9 is liable to have a residual stress due to the heat energy or the mechanical stress. If the residual stress exists in the pressure sensing element 9, a characteristic of linearity of the pressure sensing element 9 is deteriorated. Besides, an undesirable change of resistance value with the time passage is liable to arise.

In the combustion pressure sensor of the first embodiment, the step-cut part 2A of the lower body 2 is remotely disposed from the flange 2C so that the pressure sensing element 9 is not influenced by the heat energy or the mechanical stress. It is preferable that a distance L between the step-cut part 2A and the flange 2C is 2mm or more in order to relieve from influence of welding or caulking.

Prior to the mechanical connection of the upper body 4 to the lower body 2, terminals 20A of a printed circuit board 20 having a circuit for detecting a pressure are connected to the conductive films 13 (FIG.3A) of the pressure sensing element 9 with respective wires 23. The printed circuit board 20 has the bridge circuit 122, the differential amplifier 121 as shown in FIG.9 and a variable resistor 123 for adjusting a gain of the differential amplifier 121 as shown in FIG.1. Two strain sensing resistors 12 of the pressure sensing element 9 are connected to the bridge circuit 122 as replacements for the resistors 108 and R, respectively. The bridge circuit 122 is connected to the differential amplifier 121. Terminals 20B of the printed circuit board 20 are connected to a connector 24 by respective wires 23A. Two of three terminals 20B are for power supply, and one is for an output.

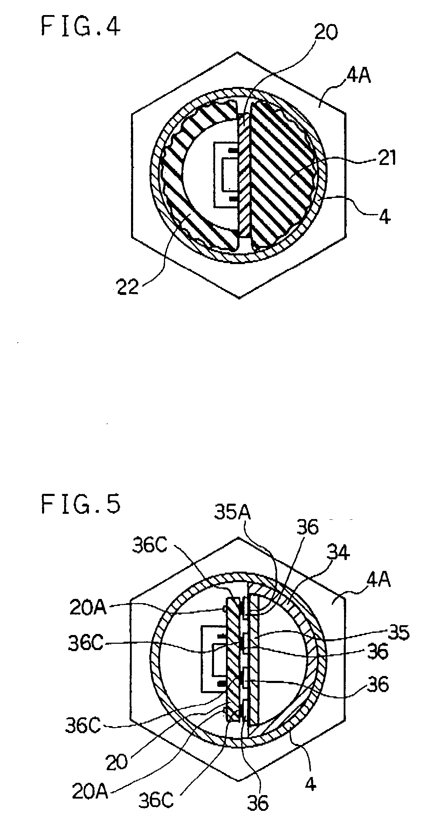

After adjusting the gain of the differential amplifier 121 by operation of the variable resister 123, the upper body 4 is mechanically connected to the lower body 2. In the upper body 4, as shown in FIG.4, the printed circuit board 20 is held between silicon rubber members 21 and 22. The plug 5 for supporting the connector 24 is coupled to the upper body 4 by screwing its internal threads in the external threads 4C of the upper body 4.

The combustion pressure sensor is mounted to a cylinder of an internal combustion engine (not shown) with the external threads 2B of the lower body 2. The pressure in the cylinder, which is 60kg/cm²---100kg/cm² in a gasoline engine, is applied to the diaphragm 7, and the pressure transmission member 8 is moved in the axial direction of the lower body 2. Consequently, the pressure sensing element 9 is bent and extended, and the strain sensing resistors 12 are also bent and extended. The resistance values of the strain sensing resistors 12 change by bending and extending. Changes of the resistance values of the strain sensing resistors 12 are detected by change of the output voltage 121A of the differential amplifier 121, and the pressure is detected on the basis of the change of the output voltage 12A in a common manner.

### [Second Embodiment]

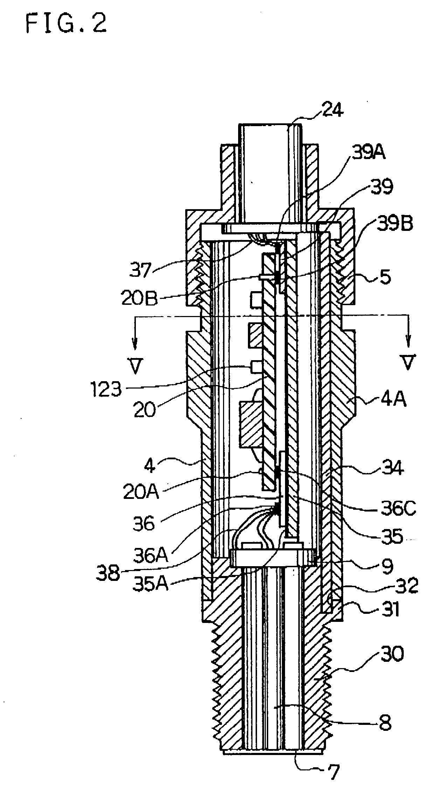

A second embodiment is described hereafter with reference to FIG.2 and FIG.5.

FIG.2 is a cross-sectional side view of the combustion pressure sensor of the second embodiment in accordance with the present invention. FIG.5 is a cross-sectional view at V-V section plane of FIG.2. Referring to FIG.2, a lower body 30 has a groove 32 inside of a flange 31. The groove 32 is formed by a semicircle along the flange 31. Other configurations of the lower body 30 are similar to the lower body 2 in the first embodiment.

A semi-cylindrically shaped attachment member 34 made of metal is inserted in the groove 32, and is fixed thereto by welding or caulking. It is preferable to fix the attachment member 34 is fixed to the groove 32 after fixing the pressure sensing element 9 to the lower body 30. As shown in FIG.2 and FIG.5, a plate member 35 and a connector 24 are attached to the attachment member 34 by welding, for example.

The plate member 35 has an insulation film 35A of glass or ceramic on a surface. Four oblong conductive films 36 and three oblong conductive films 39 are formed on the insulation film 35A in the axial direction of the lower body 30. The conductive films 36 and 39 are formed by coating paste containing silver and platinum.

Alternatively, the plate member 35 can be made by an insulation film or a plate of non-conductive material such as ceramic. In this case, the conductive films 36 and 39 of are formed on the surface of the non-conductive material.

Each conductive film 36 has a terminal 36A. The terminals 36A are connected to the respective conductive films 13 shown in FIG.3A by wires 38. Each conductive film 36 also has a terminal 36C. The terminals 36C are connected to the respective terminals 20A of the printed circuit board 20. In a similar manner, each conductive film 39 has a terminal 39A and a terminal 39B. The terminals 20B of the printed circuit board 20 are connected to the respective conductive films 39 through the terminals 39B. Moreover, the terminals 39A are connected to the connector 24 by respective wires 37.

In place of the attachment member 34, a tube having a semicircular cross section is usable. The insulation film 35A and the conductive films 36 and 39 are formed on a flat part of the tube.

The upper body 4 having the same shape as that in the first embodiment is attached to the lower body 30 by the same manner. Finally, the plug 5 is fixed by screwing to the upper body 4.

According to the second embodiment, the printed circuit board 20 is fixed to the plate member 35 which is isolated from the pressure sensing element 9 and is fixed to the lower body 30, and therefore it does not move responding to the vibration of the pressure sensing element 9. Additionally, the wires 37 and 38 are connected to the terminals 39A and 36A fixed on the plate member 35, respectively. Therefore, they are not moved by vibration, and reliability in connection is improved. The plate member 35, the connector 24, the printed circuit board 20 and the wires 37 and 38 can be assembled in the semi-cylindrical attachment member 34 from one direction. Therefore it is not necessary to turn the lower body 30 over in assembly process. Consequently, the assembly process can be automated, and a fabrication cost is reduced.

### [Third Embodiment]

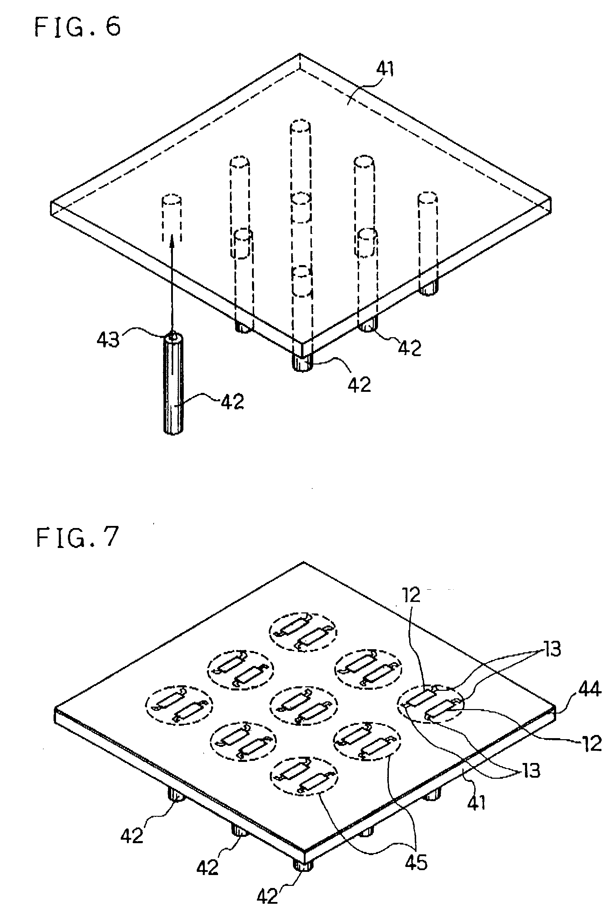

A third embodiment is described hereafter with reference to FIG.6 and FIG.7.

The third embodiment relates to a fabrication method of the pressure sensing element 9 of the combustion pressure sensor in accordance with the present invention. FIG.6 is a perspective view showing the fabrication method of the pressure sensing element 9. Referring to FIG.6, first, a plurality of pressure transmission members 42 are welded on one face of a metal substrate 41 having a sufficiently larger area than the pressure sensing element 9 at predetermined intervals.

The pressure transmission member 42 can be welded to the metal substrate 41 by projection welding, for example. In the projection welding, a projection 43 formed on an upper face of the pressure transmission member 42 is welded to the metal substrate 41. The pressure transmission member 42 can be welded to the metal substrate 41 by laser beam welding.

After weld-fixing of a predetermined number (nine in the case of FIG.6) of pressure transmission members 42 on one face of the metal substrate 41, an insulation film 44 of non-alkaline glassceramic is formed on the other face of the metal substrate 41.

Subsequently, on the surface of the insulation film 44, four conductive films 13 and two strain sensing resistors 12 are formed in each region of a circle 45 shown by broken line corresponding to each pressure transmission member 42 by a similar process to the first embodiment. FIG.7 is a perspective view of the metal substrate 41 on which the conductive films 13 and the strain sensing resistors 12 are formed.

Finally, the metal substrate 41 is cut into pieces along the circles 45 with a laser beam cutting machine. Consequently, nine pressure sensing elements 9 each having the pressure transmission member 42 are completed.

The metal substrate 41 of the pressure sensing element 9 and the pressure transmission members 42 are preferably made by stainless steel.

According to the third embodiment, since a plurality of the pressure transmission members 42 are welded on the large metal substrate 41 at constant intervals, the welding process can be automated. Moreover, a plurality of the conductive films 13 and a plurality of the strain sensing resistors 12 are formed on the large metal substrate 41, these forming process can be easily automated. Consequently, the fabrication cost of the pressure sensing element 9 is largely reduced. Since the strain sensing resistors 12 are formed after welding the pressure transmission members 42 to the metal substrate 41, the strain sensing resistors 12 are not influenced by heat in the welding process.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

## Claims

1. A combustion pressure sensor comprising:
a lower body (2) having a through-hole (3),
a pressure sensing element (9) having a substrate (15) fixed to upper end part of said lower body (2), an insulation film (10) formed on said substrate, at least one strain sensing resistor (12) formed on said insulation film and electrodes (13) formed on said insulation film so as to be electro-conductive to said strain sensing resistor (12),
a diaphragm (7) for hermetically sealing said through-hole (3) at the lower end part of said lower body (2),
a pressure transmission member (8) connecting between said pressure sensing element (9) and said diaphragm (7) so as to transmit motion of said diaphragm (7) to said pressure sensing element (9), and
a substantially cylindrical upper body (4) for covering said pressure sensing element (9), and fixed to said lower body (2) so that the fixing part between said lower body (2) and said upper body (4) is disposed with a predetermined distance (L) from said pressure sensing element (9). (FIGs.1, 4)

2. A combustion pressure sensor in accordance with claim 1, wherein
an attachment member (34) having a built-in circuit (20) and a connector (24) is attached on said lower body (30). (FIGs.2, 5)

3. A combustion pressure sensor in accordance with claim 1, wherein
said pressure sensing element (9) and said pressure transmission member (8) are of integral configuration. (FIGs.3A, 3B)

4. A method of making a combustion pressure sensor comprising:
a lower body (2) having a through-hole (3),
a pressure sensing element (9) having a substrate (15) fixed to upper end part of said lower body (2), an insulation film (10) formed on said substrate, at least one strain sensing resistor (12) formed on said insulation film and electrodes (13) formed on said insulation film so as to be electro-conductive to said strain sensing resistor (12),
a diaphragm (7) for hermetically sealing said through-hole (3) at the lower end part of said lower body (2),
a pressure transmission member (8) connecting between said pressure sensing element (9) and said diaphragm (7) so as to transmit motion of said diaphragm (7) to said pressure sensing element (9), and
a substantially cylindrical upper body (4) for covering said pressure sensing element (9), and fixed to said lower body (2) so that the fixing part between said lower body (2) and said upper body (4) is disposed with a predetermined distance (L) from said pressure sensing element (9), wherein
a peripheral part of said substrate of said pressure sensing element (9) is cut after forming said insulation film (10) on said substrate of said pressure sensing element (9). (FIGs.3A, 3B)

5. A method of making a pressure sensing element of a combustion pressure sensor comprising the steps of:
fixing plural pressure transmission members (42) onto a first face of a substrate (41) having a sufficiently larger area than a pressure sensing element at predetermined intervals at predetermined regions on the rear side to become said pressure sensing element (9),
forming an insulation film (44) on a second face, which is opposite to said first face of said substrate (41),
forming at least one strain sensing resistor (12) and at least two electrodes (13) connected thereto on said insulation film (41) in respective predetermined regions to become pressure sensing elements (42), and
cutting said substrate (41) along circles which are on said predetermined regions. (FIGs.6, 7)

6. A method of making a pressure sensing element of a combustion pressure sensor comprising the steps of:
fixing a pressure transmission member (8) onto a first face of a substrate (15) having a larger area than a pressure sensing element (9) at a predetermined region on the rear side to become pressure sensing element (9),
forming an insulation film (10) on a second face, which is opposite to said first face of said substrate (41),
forming at least one strain sensing resistor (12) and at least two electrodes (13) connected thereto on said insulation film (10) in respective predetermined regions to become pressure sensing elements (9), and
cutting a peripheral part of said substrate of said pressure sensing element after forming said insulation film (10) on said substrate of said pressure sensing element (9). (FIGs.3A, 3B)
